# EUROPEAN PATENT APPLICATION

(11) **EP 4 072 122 A1**
(43) Date of publication of application: **12.10.2022**
(21) Application number: 20912377.7
(22) Date of filing: 11.11.2020
(51) Int. Cl.: H04N 5/232, H04N 7/18

(54) **METHOD AND SYSTEM FOR CONTROLLING VEHICLE-MOUNTED CAMERA BY MEANS OF MOBILE DEVICE, AND DEVICE**

(30) Priority: 09.01.2020 CN 202010023849
(71) Applicant: Huawei Technologies Co., Ltd., Shenzhen, Guangdong 518129 (CN)
(72) Inventor: TAO, Qiang, Shenzhen, Guangdong 518129 (CN); HAN, Jing, Shenzhen, Guangdong 518129 (CN); GAO, Guangyuan, Shenzhen, Guangdong 518129 (CN)
(74) Representative: Pfenning, Meinig & Partner mbB
(86) International application number: PCT/CN2020/128012
(87) International publication number: WO 2021/139388

(57) **Abstract**

This solution relates to the field of intelligent vehicles, and may be applied to vehicle to everything (vehicle to everything, V2X). A method for controlling an operation of a vehicle-mounted camera based on computer vision, a device, and a system are provided. In an embodiment, the method is implemented by a mobile device, and the method includes: communicatively connecting a vehicle control apparatus, where the vehicle control apparatus includes at least one vehicle-mounted camera; configuring at least one virtual camera based on camera information, where the at least one virtual camera corresponds to the at least one vehicle-mounted camera in a one-to-one manner; and enabling the at least one virtual camera to obtain a video signal shot by a vehicle-mounted camera corresponding to the at least one virtual camera. In this embodiment of this solution, a passenger can control an operation on the vehicle-mounted camera, which brings good user experience. The method may be applied to an artificial intelligence (Artificial Intelligence, AI) device.

## Description

This application claims priority to Chinese Patent Application No. CN202010023849.6, filed with China National Intellectual Property Administration on January 9, 2020 and entitled "METHOD FOR CONTROLLING VEHICLE-MOUNTED CAMERA BY USING MOBILE DEVICE, DEVICE, AND SYSTEM", which is incorporated herein by reference in its entirety.

### TECHNICAL FIELD

This solution relates to the field of intelligent vehicles, and specifically, to a method for controlling a vehicle-mounted camera by using a mobile device, a device, and a system.

### BACKGROUND

With the digital and intelligent development of intelligent vehicles, vehicles are endowed with new functions. One of the changes is to a vehicle-mounted camera. There is more than one vehicle-mounted camera, and the vehicle-mounted camera is multi-functional and omnidirectional. A driver may control switching, orientation display, and the like of the camera by using a center console or a steering wheel.

Although it is relatively convenient for the driver to control the vehicle camera, there is little control method and space for a passenger, especially a rear-row passenger. The passenger experience is affected.

### SUMMARY

Embodiments of this solution provide a method for controlling an operation of a vehicle control apparatus, a mobile device, and a vehicle control apparatus, to achieve operation control experience on the vehicle control apparatus at a mobile device end.

According to a first aspect, an embodiment of this solution provides a method for controlling an operation of a vehicle control apparatus. The method is implemented by a mobile device, and the vehicle control apparatus is located on a vehicle. The method includes: communicatively connecting the vehicle control apparatus; receiving camera information of at least one vehicle-mounted camera of the vehicle control apparatus; configuring at least one virtual camera based on the camera information, where the at least one virtual camera corresponds to the at least one vehicle-mounted camera in a one-to-one manner; and enabling the at least one virtual camera to obtain a video signal shot by a vehicle-mounted camera corresponding to the at least one virtual camera.

With reference to the first aspect, in a possible embodiment, the communicatively connecting the vehicle control apparatus includes: implementing a communication connection to the vehicle control apparatus by using near field communication.

With reference to the first aspect, in a possible embodiment, after the enabling the at least one virtual camera to obtain a video signal of a vehicle-mounted camera corresponding to each virtual camera of the at least one virtual camera, the method includes: displaying the video signal.

With reference to the first aspect, in a possible embodiment, the method further includes: when a rotation angle of the mobile device changes within a shooting range of the vehicle-mounted camera, sending a first instruction to the vehicle control apparatus, where the first instruction instructs the vehicle control apparatus to adjust, based on the rotation angle, an angle of the vehicle-mounted camera, and the first instruction carries the rotation angle.

With reference to the first aspect, in a possible embodiment, the method further includes: when the mobile device rotates or moves from a shooting range of a first vehicle-mounted camera to a shooting range of a second vehicle-mounted camera, controlling the mobile device to be switched from a first virtual camera to a second virtual camera, where the first vehicle-mounted camera corresponds to the first virtual camera, and the second vehicle-mounted camera corresponds to the second virtual camera; and obtaining a video signal shot by the second vehicle-mounted camera.

With reference to the first aspect, in a possible embodiment, the method further includes: before the enabling the at least one virtual camera to obtain a video signal shot by a vehicle-mounted camera corresponding to the at least one virtual camera, presenting a user interface on a screen of the mobile device, where the user interface displays video data obtained by a camera of the mobile device, and the user interface is configured to prompt a user to adjust a direction of the mobile device to be consistent with a direction of the vehicle, to complete correction in the direction of the mobile device.

With reference to the first aspect, in a possible embodiment, the enabling the at least one virtual camera to obtain a video signal of a vehicle-mounted camera corresponding to the at least one virtual camera includes: obtaining, by using the at least one virtual camera, the video signal of the vehicle-mounted camera corresponding to the at least one virtual camera, where the video signal carries gesture information of the user; and sends a third instruction to the vehicle control apparatus based on the gesture information, so that the vehicle control apparatus controls a vehicle-mounted device in the vehicle, where the third instruction is determined based on the gesture.

With reference to the first aspect, in a possible embodiment, the method further includes: receiving at least one vehicle control category from the vehicle control apparatus; obtaining at least one gesture/posture; and storing an association relationship between the at least one gesture/posture and the at least one vehicle control category.

According to a second aspect, an embodiment of this solution provides a method for controlling an operation of a vehicle control apparatus. The method is implemented by a vehicle control apparatus located on a vehicle, where the vehicle control apparatus includes at least one vehicle-mounted camera, and the method includes: establishing a communication connection to a mobile device; sending camera information of the at least one vehicle-mounted camera to the mobile device, so that the mobile device configures at least one virtual camera based on the camera information, where the at least one virtual camera corresponds to the at least one vehicle-mounted camera in a one-to-one manner; and enabling the at least one vehicle-mounted camera according to a first instruction of the mobile device, and sending a video signal shot by the at least one vehicle-mounted camera to the mobile device, where the video signal is a video signal of the at least one virtual camera.

With reference to the second aspect, in a possible embodiment, the method further includes: receiving a second instruction of the mobile device, where the second instruction includes an identifier of the at least one vehicle-mounted camera and a rotation angle, and the second instruction instructs to adjust, based on the rotation angle, a shooting angle of the at least one vehicle-mounted camera; and sending, to the mobile device, video data shot by the at least one vehicle-mounted camera after the shooting angle is adjusted.

With reference to the second aspect, in a possible embodiment, the at least one vehicle-mounted camera includes a first vehicle-mounted camera and a second vehicle-mounted camera. The method further includes: receiving a third instruction of the mobile device, where the third instruction includes an identifier of the second vehicle-mounted camera, and the third instruction instructs the vehicle control apparatus to switch the first vehicle-mounted camera to the second vehicle-mounted camera. The enabling the at least one vehicle-mounted camera according to a first instruction of the mobile device, and sending a video signal shot by the at least one vehicle-mounted camera to the mobile device includes: sending, to the mobile device, a video signal shot by using the second vehicle-mounted camera.

With reference to the second aspect, in a possible embodiment, the at least one vehicle-mounted camera includes a third camera located in the vehicle, and the vehicle further includes a vehicle-mounted device. The enabling the at least one vehicle-mounted camera according to a first instruction of the mobile device, and sending a video signal shot by the at least one vehicle-mounted camera to the mobile device includes: obtaining a video signal of the third camera, where the video signal carries gesture information of a user. The method includes: receiving a fourth instruction of the mobile device, and controlling the vehicle-mounted device according to the fourth instruction, where the fourth instruction is determined based on the gesture information.

According to a third aspect, an embodiment of this solution provides a mobile device, including a processor, a memory, and a communication module. The memory is configured to store computer-executable instructions. The communication module is configured to establish a connection between the mobile device and a vehicle control apparatus. The processor is configured to execute the computer-executable instructions to enable the mobile device to perform the following operations: communicatively connecting the vehicle control apparatus; receives camera information of at least one vehicle-mounted camera of the vehicle control apparatus; configuring at least one virtual camera based on the camera information, where the at least one virtual camera corresponds to the at least one vehicle-mounted camera in a one-to-one manner; and enabling the at least one virtual camera to obtain a video signal shot by a vehicle-mounted camera corresponding to the at least one virtual camera.

With reference to the third aspect, in a possible embodiment, the processor executes the computer-executable instructions to enable the mobile device to perform the following operation: implementing a communication connection to the vehicle control apparatus by using near field communication.

With reference to the third aspect, in a possible embodiment, the processor executes the computer-executable instructions to enable the mobile device to perform the following operation: displaying the video signal after enabling the at least one virtual camera to obtain a video signal of a vehicle-mounted camera corresponding to each virtual camera of the at least one virtual camera.

With reference to the third aspect, in a possible embodiment, the processor executes the computer-executable instructions to enable the mobile device to perform the following operation: when a rotation angle of the mobile device changes within a shooting range of the vehicle-mounted camera, sending a first instruction to the vehicle control apparatus, where the first instruction instructs the vehicle control apparatus to adjust, based on the rotation angle, an angle of the vehicle-mounted camera, and the first instruction carries the rotation angle.

With reference to the third aspect, in a possible embodiment, the processor executes the computer-executable instructions to enable the mobile device to perform the following operations: when the mobile device rotates or moves from a shooting range of a first vehicle-mounted camera to a shooting range of a second vehicle-mounted camera, controlling the mobile device to be switched from a first virtual camera to a second virtual camera, where the first vehicle-mounted camera corresponds to the first virtual camera, and the second vehicle-mounted camera corresponds to the second virtual camera; and obtaining a video signal shot by the second vehicle-mounted camera.

With reference to the third aspect, in a possible embodiment, the processor executes the computer-executable instructions to enable the mobile device to perform the following operations: before the enabling the at least one virtual camera to obtain a video signal shot by a vehicle-mounted camera corresponding to the at least one virtual camera, presenting a user interface on a screen of the mobile device, where the user interface displays video data obtained by a camera of the mobile device, and the user interface is configured to prompt a user to adjust a direction of the mobile device to be consistent with a direction of the vehicle, to complete correction in the direction of the mobile device.

With reference to the third aspect, in a possible embodiment, the processor executes the computer-executable instructions to enable the mobile device to perform the following operations: obtaining, by using the at least one virtual camera, the video signal of the vehicle-mounted camera corresponding to the at least one virtual camera, where the video signal carries gesture information of the user; and sending a third instruction to the vehicle control apparatus based on the gesture information, so that the vehicle control apparatus controls a vehicle-mounted device in the vehicle, where the third instruction is determined based on the gesture.

With reference to the third aspect, in a possible embodiment, the processor executes the computer-executable instructions to enable the mobile device to perform the following operations: receiving at least one vehicle control category from the vehicle control apparatus; obtaining at least one gesture/posture; and storing an association relationship between the at least one gesture/posture and the at least one vehicle control category.

According to a fourth aspect, an embodiment of this solution provides a vehicle control apparatus, including a processor, a memory, a communication module, and at least one vehicle-mounted camera. The memory is configured to store computer-executable instructions. The processor executes the computer-executable instructions to enable the vehicle control apparatus to perform the following operations: establishing a communication connection to a mobile device; sending camera information of the at least one vehicle-mounted camera to the mobile device, so that the mobile device configures at least one virtual camera based on the camera information, where the at least one virtual camera corresponds to the at least one vehicle-mounted camera in a one-to-one manner; and enabling the at least one vehicle-mounted camera according to a first instruction of the mobile device, and sending a video signal shot by the at least one vehicle-mounted camera to the mobile device, where the video signal is a video signal of the at least one virtual camera.

With reference to the fourth aspect, in a possible embodiment, the processor executes the computer-executable instructions to enable the vehicle control apparatus to perform the following operations: receiving a second instruction of the mobile device, where the second instruction includes an identifier of the at least one vehicle-mounted camera and a rotation angle, and the second instruction instructs to adjust, based on the rotation angle, a shooting angle of the at least one vehicle-mounted camera; and sending, to the mobile device, video data shot by the at least one vehicle-mounted camera after the shooting angle is adjusted.

With reference to the fourth aspect, in a possible embodiment, the at least one vehicle-mounted camera includes a first vehicle-mounted camera and a second vehicle-mounted camera. The processor executes the computer-executable instructions to enable the vehicle control apparatus to perform the following operations: receiving a third instruction of the mobile device, where the third instruction includes an identifier of the second vehicle-mounted camera, and the third instruction instructs the vehicle control apparatus to switch the first vehicle-mounted camera to the second vehicle-mounted camera; and sending, to the mobile device, a video signal shot by using the second vehicle-mounted camera.

With reference to the fourth aspect, in a possible embodiment, the at least one vehicle-mounted camera includes a third camera located in the vehicle; the vehicle further includes a vehicle-mounted device; the processor executes the computer-executable instructions to enable the vehicle control apparatus to perform the following operations: obtaining a video signal of the third camera, where the video signal carries gesture information of a user; and receiving a fourth instruction of the mobile device, and controlling the vehicle-mounted device according to the fourth instruction, where the fourth instruction is determined based on the gesture information.

According to a fifth aspect, an embodiment of this solution provides a mobile device. The mobile device includes: a communication connection module, configured to communicatively connect the vehicle control apparatus; a receiving module, configured to receive camera information of at least one vehicle-mounted camera of the vehicle control apparatus; a configuring module, configured to configure at least one virtual camera based on the camera information, where the at least one virtual camera corresponds to the at least one vehicle-mounted camera in a one-to-one manner; and an obtaining module, configured to enable the at least one virtual camera to obtain a video signal shot by a vehicle-mounted camera corresponding to the at least one virtual camera.

With reference to the fifth aspect, in a possible embodiment, the communication connection module implements a communication connection to the vehicle control apparatus by using near field communication.

With reference to the fifth aspect, in a possible embodiment, after the obtaining module enables the at least one virtual camera to obtain a video signal of a vehicle-mounted camera corresponding to each virtual camera of the at least one virtual camera, the obtaining module displays the video signal.

With reference to the fifth aspect, in a possible embodiment, the mobile device further includes: a sending module, configured to: when a rotation angle of the mobile device changes within a shooting range of the vehicle-mounted camera, send a first instruction to the vehicle control apparatus, where the first instruction instructs the vehicle control apparatus to adjust, based on the rotation angle, an angle of the vehicle-mounted camera, and the first instruction carries the rotation angle.

With reference to the first aspect, in a possible embodiment, the mobile device further includes: a switching module, configured to: when the mobile device rotates or moves from a shooting range of a first vehicle-mounted camera to a shooting range of a second vehicle-mounted camera, control the mobile device to be switched from a first virtual camera to a second virtual camera, where the first vehicle-mounted camera corresponds to the first virtual camera, and the second vehicle-mounted camera corresponds to the second virtual camera; the obtaining module, configured to obtain a video signal shot by the second vehicle-mounted camera.

With reference to the fifth aspect, in a possible embodiment, the mobile device further includes: a presentation module, configured to: before the enabling the at least one virtual camera to obtain a video signal shot by a vehicle-mounted camera corresponding to the at least one virtual camera, present a user interface on a screen of the mobile device, where the user interface displays video data obtained by a camera of the mobile device, and the user interface is configured to prompt a user to adjust a direction of the mobile device to be consistent with a direction of the vehicle, to complete correction in the direction of the mobile device.

With reference to the fifth aspect, in a possible embodiment, the obtaining module obtains, by using the at least one virtual camera, the video signal of the vehicle-mounted camera corresponding to the at least one virtual camera, where the video signal carries gesture information of the user; and sends a third instruction to the vehicle control apparatus based on the gesture information, so that the vehicle control apparatus controls a vehicle-mounted device in the vehicle, where the third instruction is determined based on the gesture.

With reference to the fifth aspect, in a possible embodiment, the mobile device further includes: the receiving module, configured to receive at least one vehicle control category from the vehicle control apparatus; the obtaining module, configured to obtain at least one gesture/posture; and a storage module, configured to store an association relationship between the at least one gesture/posture and the at least one vehicle control category.

According to a sixth aspect, an embodiment of this solution provides a vehicle control apparatus. The vehicle control apparatus includes at least one vehicle-mounted camera. The vehicle control apparatus includes: a communication connection module, configured to communicatively connect the mobile device; a sending module, configured to send camera information of the at least one vehicle-mounted camera to the mobile device, so that the mobile device configures at least one virtual camera based on the camera information, where the at least one virtual camera corresponds to the at least one vehicle-mounted camera in a one-to-one manner; and an enabling module, configured to: enable the at least one vehicle-mounted camera according to a first instruction of the mobile device, and send a video signal shot by the at least one vehicle-mounted camera to the mobile device, where the video signal is a video signal of the at least one virtual camera.

With reference to the sixth aspect, in a possible embodiment, the vehicle control apparatus further includes: a receiving module, configured to receive a second instruction of the mobile device, where the second instruction includes an identifier and a rotation angle of the at least one vehicle-mounted camera, and the second instruction instructs to adjust, based on the rotation angle, a shooting angle of the at least one vehicle-mounted camera; and the sending module, configured to send, to the mobile device, video data shot by the at least one vehicle-mounted camera after the shooting angle is adjusted.

With reference to the sixth aspect, in a possible embodiment, the at least one vehicle-mounted camera includes a first vehicle-mounted camera and a second vehicle-mounted camera. The vehicle control apparatus further includes: the receiving module, configured to receive a third instruction of the mobile device, where the third instruction includes an identifier of the second vehicle-mounted camera, and the third instruction instructs the vehicle control apparatus to switch the first vehicle-mounted camera to the second vehicle-mounted camera. The sending module sends a video signal shot by using the second vehicle-mounted camera to the mobile device.

With reference to the sixth aspect, in a possible embodiment, the at least one vehicle-mounted camera includes a third camera located in the vehicle. The vehicle further includes a vehicle-mounted device. The sending module obtains a video signal of the third camera. The video signal carries gesture information of a user. The vehicle control apparatus includes a receiving module, configured to: receive a fourth instruction of the mobile device, and control the vehicle-mounted device according to the fourth instruction, where the fourth instruction is determined based on the gesture information.

According to a seventh aspect, an embodiment of this solution provides a computer storage medium. The computer storage medium includes computer instructions, and when the computer instructions are run on an electronic device, the electronic device is enabled to perform the method according to the first aspect or the second aspect.

According to an eighth aspect, an embodiment of this solution provides a computer program product. When program code included in the computer program product is executed by a processor in an electronic device, the method according to the first aspect or the second aspect is implemented.

### BRIEF DESCRIPTION OF DRAWINGS

FIG. 1 is a schematic diagram of a system for controlling an operation of a vehicle control apparatus according to an embodiment of this solution;
FIG. 2A and FIG. 2B are schematic diagrams of interaction between a mobile phone side and a vehicle control apparatus side according to an embodiment of this solution;
FIG. 3 is a schematic diagram of displaying a vehicle control apparatus mode through a menu option;
FIG. 4 is a schematic diagram of a guiding user interface UI;
FIG. 5 is a schematic diagram of presenting, on a screen interface of a mobile phone, an image or a video captured by a camera in the front;
FIG. 6 is a schematic diagram of interaction between a mobile phone side and a vehicle control apparatus side according to another embodiment of this solution;
FIG. 7 is a schematic diagram of displaying, in a drop-down menu, a switch shortcut button for switching a vehicle-mounted camera;
FIG. 8 is a schematic diagram of floating a switch button for switching a vehicle-mounted camera on an interface of a video application;
FIG. 9A and FIG. 9B are schematic diagrams of a method for interaction between a mobile phone side and a vehicle control apparatus side according to still another embodiment of this solution;
FIG. 10 is a flowchart of a method for controlling an operation of a vehicle control apparatus according to an embodiment of this solution;
FIG. 11 is a flowchart of a method for controlling an operation of a vehicle control apparatus according to another embodiment of this solution;
FIG. 12 is a schematic diagram of a structure of switching a camera on a system user interface UI;
FIG. 13 is a schematic diagram of a mobile device according to an embodiment of this solution; and
FIG. 14 is a schematic diagram of a vehicle control apparatus according to an embodiment of this solution.

### DESCRIPTION OF EMBODIMENTS

The following describes technical solutions in embodiments of the present invention with reference to accompanying drawings. It is clearly that the described embodiments are merely some rather than all of embodiments of this solution.

In the descriptions of this solution, "an embodiment", "some embodiments", or the like indicates that one or more embodiments of this solution include a specific feature, structure, or characteristic described with reference to embodiments. Therefore, statements such as "in an embodiment", "in some embodiments", "in some other embodiments", and "in other embodiments" that appear at different places in this solution do not necessarily mean referring to a same embodiment. Instead, the statements mean "one or more but not all of embodiments", unless otherwise specifically emphasized.

In descriptions of this solution, unless otherwise specified, "/" indicates a meaning of or. For example, A/B may indicate A or B. In this specification, "and/or" describes only an association relationship between associated objects, and indicates that three relationships may exist. For example, A and/or B may indicate the following three cases: A exists alone, both A and B exist, and B exists alone. In addition, in the descriptions in embodiments of this solution, "a plurality of' means two or more than two.

In the descriptions of this solution, the terms "first" and "second" are merely intended for description, and shall not be understood as an indication or implication of relative importance or implicit indication of a quantity of indicated technical features. Therefore, a feature limited by "first" or "second" may explicitly or implicitly include one or more features. The terms "include", "contain", "have", and their variants all mean "include but are not limited to", unless otherwise specifically emphasized in other ways.

In this solution, a method for controlling an operation of a vehicle control apparatus, a device, and a system are provided. In at least one embodiment, a mobile device is connected to the vehicle control apparatus, to register a corresponding quantity of virtual cameras for at least one vehicle-mounted camera of the vehicle control apparatus. An application running on the mobile device may enable one or more virtual cameras, to obtain a video signal of a vehicle-mounted camera corresponding to the virtual camera.

A vehicle is a transportation tool that rotates wheels on land, and includes but is not limited to a car, an electric vehicle, a truck, a bus, and the like.

The vehicle control apparatus is related to an infotainment product installed in the vehicle. The vehicle control apparatus functionally implements control of a vehicle-mounted infotainment facility and a related device by a person, and may also be configured to implement information communication between the vehicle and the outside. The vehicle control apparatus is usually referred to as a head unit for short.

The mobile device includes but is not limited to a portable electronic device such as a mobile phone, a tablet computer, a digital camera, a personal digital assistant (personal digital assistant, PDA), a wearable device, or a laptop (laptop).

In an embodiment, an application on the mobile device may display a video signal based on a vehicle-mounted camera corresponding to a virtual camera. The application may be one of a camera application, a video or image application, or an application that adopts a video/image application scenario.

In an embodiment, the mobile device may learn information about the vehicle-mounted camera in advance and establish a correspondence between the mobile device and the vehicle in which the vehicle control apparatus is located. The information about the vehicle-mounted camera includes but is not limited to location information, field of view information, and orientation information. When it is detected that a rotation angle of the mobile device is in a shooting angle range of a vehicle-mounted camera or corresponds to an orientation of the vehicle-mounted camera or a field of view covered by the vehicle-mounted camera, the mobile device controls the vehicle-mounted camera to adjust, based on the rotation angle, an angle of the mobile device. The shooting angle range may represent an allowable change range of a field of view that is of each vehicle-mounted camera in the at least one camera when capturing an image and that is relative to the vehicle in which the vehicle control apparatus is located.

In an embodiment, the mobile device may learn the orientation information of the vehicle-mounted camera in advance. When the mobile device rotates or moves from a shooting range of a first vehicle-mounted camera to a shooting range of a second vehicle-mounted camera, the mobile device controls the vehicle control apparatus to switch the vehicle-mounted camera.

In an embodiment, the application on the mobile device may pre-establish a correspondence between a posture and a vehicle control category. When the application on the mobile device detects that the video signal of the vehicle-mounted camera carries a gesture of a user, the mobile device controls, based on the gesture, the vehicle control apparatus to perform vehicle control corresponding to the posture on the vehicle-mounted device.

For ease of description, with reference to a plurality of embodiments, interaction between a mobile phone and a vehicle control apparatus is used as an example to describe the present invention below. It is clearly that such embodiments may be extended to various types of mobile devices and vehicle control apparatuses, and therefore, the extended embodiments should also fall within the scope of this solution.

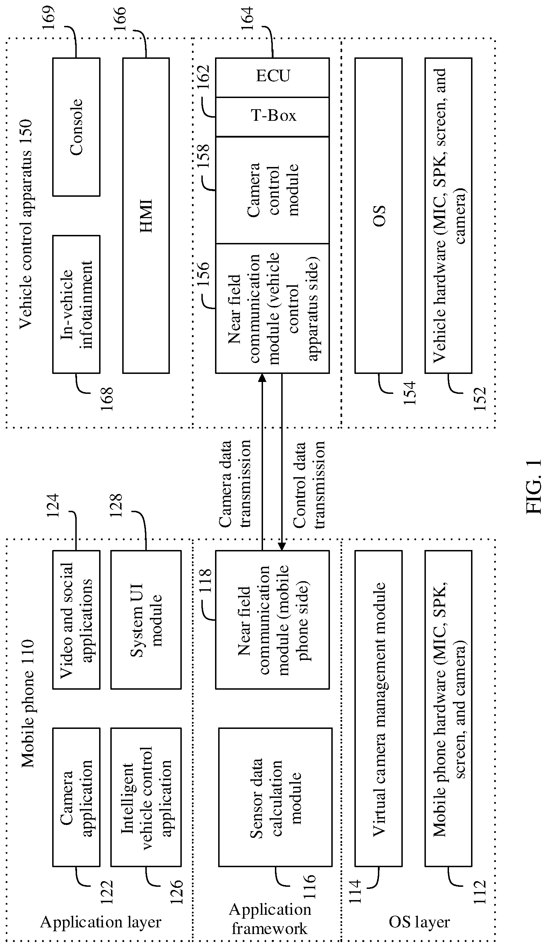

FIG. 1 is a schematic diagram of a system for controlling an operation of a vehicle control apparatus according to an embodiment of this solution. As shown in FIG. 1, the system consists of a mobile phone 110 and a vehicle control apparatus 150. The system includes two near field communication modules, consisting of a near field communication module 118 on the mobile phone side and a near field communication module 156 on the vehicle control apparatus side. The near field communication module is used by the mobile phone to discover and connect the vehicle control apparatus, and is also used by the mobile phone and the vehicle control apparatus to transmit data (camera data and control data). In an embodiment, at least one of the mobile phone 110 and the vehicle control apparatus 150 uses an Android operating system, and the near field communication modules 118 and 156 are implemented as application architecture components, for example, APIs. Certainly, a person skilled in the art may be aware that, a connection between the mobile phone and the vehicle control apparatus is implemented by using another type of communication unit, for example, an electrical connection/wired and wireless connection, a network connection, or a Bluetooth/NFC short-distance connection, which is also feasible.

The vehicle control apparatus 150 may include an in-vehicle infotainment application 168, such as podcasts, Internet access, online music, online radio, Internet TV, and online video. The in-vehicle infotainment application 168 may support a window display, and project a video onto the window by using a projection technology for watching while in a vehicle.

The vehicle control apparatus 150 may include a human machine interface (human machine interface, HMI) 166, which is an interface of an input/output device configured to establish a connection and exchange information between a person and the vehicle control apparatus. The HMI 166 includes but is not limited to a touchscreen, a keyboard, an image recognition system, a voice recognition system, and the like. The HMI 166 can support a multimedia rear-view mirror, including a radar and a camera, for facial recognition.

The vehicle control apparatus 150 may include a console 169. The console 169 may display a condition of the vehicle by using a screen of a center console; may support playing entertainment multimedia; may support a physiological function sensing system, which may adjust an ambient light in a cockpit and a seat status based on a physiological function; and may support a multimedia side-view mirror and other types of cameras to monitor and record road conditions.

The vehicle control apparatus 150 may include a camera control module 156, configured to complete a control operation on a vehicle-mounted camera based on an operation performed by a user on the center console and/or a switching instruction that is of the vehicle-mounted camera and that is delivered by a mobile phone end and/or a rotation angle.

The foregoing application and application module of the vehicle control apparatus 150 work and implement functions with the support of vehicle hardware 152 (including a microphone MIC, a speaker SPK, a screen, and the vehicle-mounted camera) and an operating system OS 154. Details about the vehicle hardware 152 and the operating system OS 154 are not described in this solution.

After the mobile phone 110 establishes a connection to the vehicle control apparatus 150 by using the near field communication module, the mobile phone 110 may allow different applications to utilize and control the vehicle control apparatus.

The mobile phone 110 may include a virtual device management module 114. In an example, the virtual device management module 114 is located at an application framework layer, and may be implemented as an application programming interface API. During construction of each application program, the API may be used to invoke each virtual device managed by the API. After the near field communication module 118 discovers the vehicle control apparatus 150, the vehicle control apparatus 150 reports parameters, such as a quantity, a location, a field of view, and an orientation of the camera of the vehicle control apparatus, to the mobile phone 110 by using the near field communication module 156 of a vehicle control apparatus end, and the mobile phone 110 virtualizes each camera of the vehicle control apparatus into a peripheral of the mobile phone by using the virtual device management module 114. When an upper-layer application uses the virtualized peripheral, the virtual device management module activates a corresponding module, and obtains image data reported by the virtual camera in real time.

The mobile phone 110 may include a sensor data calculation module 116. The sensor data calculation module 116 may monitor a current rotation angle and/or orientation of the mobile phone in real time based on the sensor data; calculate, in real time based on virtual camera information reported by the vehicle control apparatus and a correspondence between a mobile phone direction and a vehicle direction, a camera that currently needs to be activated and that has a direction consistent with a current direction of the mobile phone, and calculate an adjustment angle of the camera if necessary; and deliver data to the vehicle control apparatus end in real time by using the near field communication module, to complete control of switching and adjustment of the camera. In an example, a gyroscope may be used to measure rotation and deflection actions of the mobile phone, to accurately analyze and determine an actual change direction of the mobile phone.

The mobile phone 110 may include a camera application 122. A camera module of the system can provide a vehicle control apparatus mode. After entering the vehicle control apparatus mode, the camera application 122 may invoke a virtual camera management module to enable a virtual camera driver managed by the virtual camera management module, to obtain a video stream or an image frame of one of the vehicle-mounted cameras and complete shooting based on the video stream or the image frame.

The mobile phone 110 may include a system user interface UI module 128. The UI module 128 provides a UI module for switching the video stream of a third-party camera application (usually including video and social applications 124, such as TikTok and WeChat). A third-party application can be switched from its camera module to the vehicle-mounted camera based on the UI provided by the system without code modification by the third-party application.

The mobile phone 110 may include an intelligent vehicle control application 126. The intelligent vehicle control application 126 invokes the virtual camera management module to enable the virtual camera driver managed by the virtual camera management module, so that a video stream or an image frame of a user action is shot by using an interior camera in the vehicle-mounted cameras. Then, based on the camera module of the vehicle control apparatus, the intelligent vehicle control application 126 can analyze in real time whether the user action is used to calculate and detect a posture and a gesture that are currently preset by the user. After detecting a specified action of the user, the intelligent vehicle control application 126 delivers a corresponding vehicle control instruction to the vehicle control apparatus end, to complete automatic vehicle control.

The foregoing application and application module of the mobile phone 110 work and implement functions with the support of vehicle hardware 112 (including the microphone MIC, the speaker SPK, the screen, the gyroscope, the vehicle-mounted camera, and the like) and an operating system OS 114. Details about the vehicle hardware 112 and the operating system OS 114 are not described in this solution.

It should be noted that a plurality of software modules are involved in the foregoing discussion. A person skilled in the art understands that division of software modules may vary with different operating systems. The foregoing discussion related to the software modules is merely for understanding, and this solution is not intended to be limited thereto.

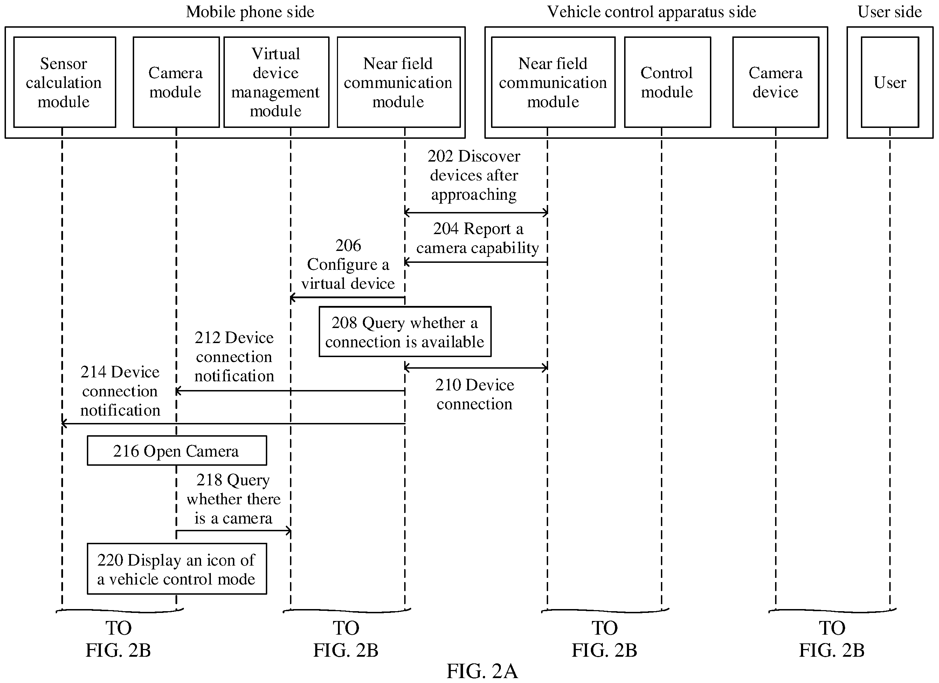

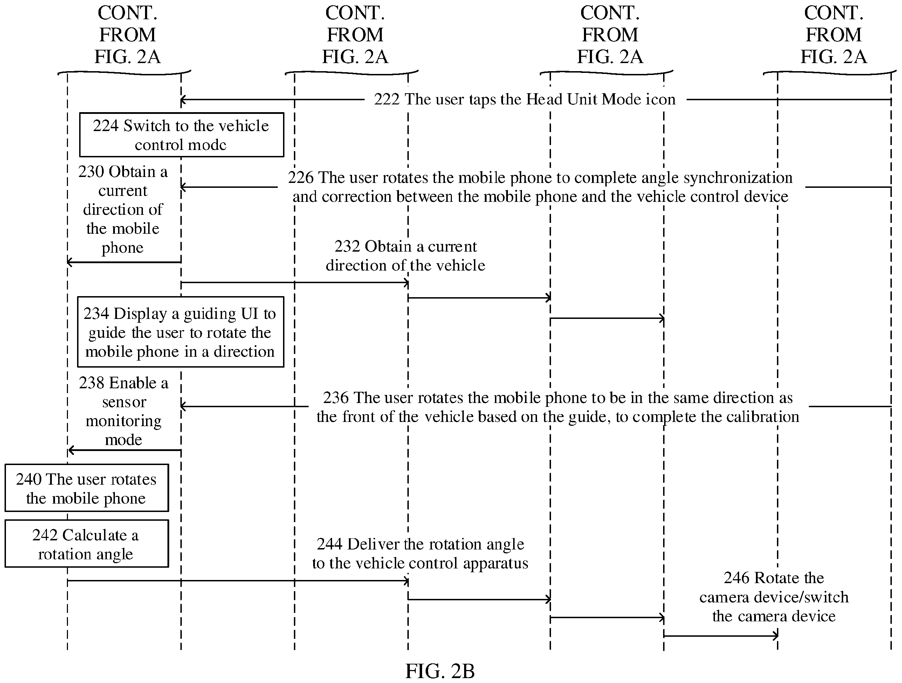

FIG. 2A and FIG. 2B are schematic diagrams of interaction between a mobile phone side and a vehicle control apparatus side according to an embodiment of this solution. Each interaction process in FIG. 2A and FIG. 2B may be executed and implemented by the corresponding module in FIG. 1. This embodiment is applicable to a scenario in which a user obtains a video or an image outside the vehicle by using a camera application.

As shown in FIG. 2A and FIG. 2B, in step 202, when the mobile phone approaches the vehicle control apparatus, the near field communication modules work to discover each other. Main functional components of the vehicle control apparatus are usually installed in the center console. Therefore, when the mobile phone approaches the center console, the near field communication modules work to discover each other.

In step 204, the near field communication module on the vehicle control apparatus side reports a camera capability to the near field communication module on the mobile phone side. In an example, information about the camera capability includes one or more attributes of location information, field of view information, and orientation information. The location information may include: the inside of the vehicle, the outside of the vehicle, the front row, and the rear row. The field of view information may include information about an angle that uses the front of the vehicle head as 0 degrees and that can be covered by each camera. The orientation information may be front left side, front side, front right side, rear left side, rear side, or rear right side.

In step 206, the near field communication module on the mobile phone side applies for configuring a virtual device from the virtual device management module.

In step 208, the near field communication module on the mobile phone side queries whether a connection is available. If the connection is available, a device connection is established in step 210.

In step 212, the near field communication module on the mobile phone side sends a device connection notification to a camera module. In an example, the camera module may subscribe to such a notification in advance.

In step 214, the near field communication module on the mobile phone side sends the device connection notification to a sensor calculation module. In an example, the sensor calculation module may subscribe to such a notification in advance.

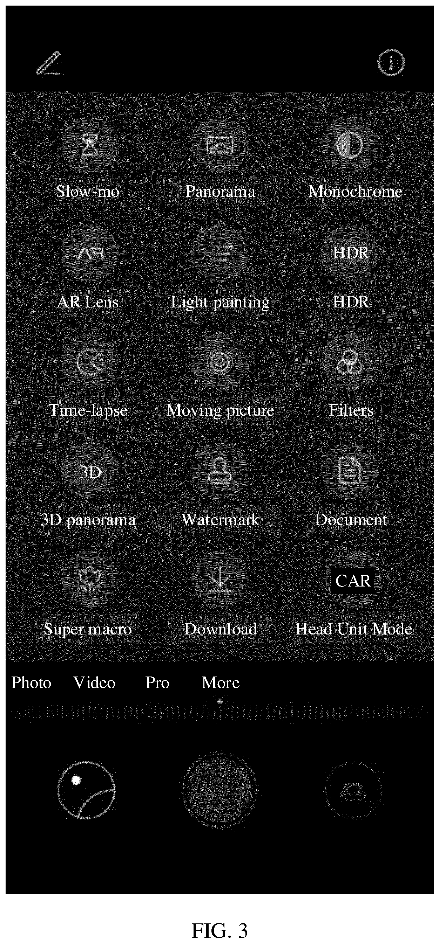

In step 216, the camera application is opened. Then, in step 218, whether there is a vehicle-mounted camera currently is queried from the virtual device management module. If there is a vehicle-mounted camera currently, the vehicle control apparatus mode is added to configuration of the camera application, and an icon of a vehicle control apparatus (which may be referred to as a head unit for short) mode is displayed in step 220. As shown in FIG. 3, the vehicle control apparatus mode is displayed in a menu option (for example, "More").

In step 222, if the user taps the icon of the vehicle control apparatus mode, the camera module is switched to the vehicle control apparatus mode in step 224. In the vehicle control apparatus mode, a plurality of cameras may be displayed in a front-facing and rear-facing manner. A front-facing camera corresponds to an interior camera, and a rear-facing camera corresponds to an exterior camera. The interior camera and the exterior camera are separately displayed by switching between the front-facing and rear-facing cameras, so that the user can easily select the camera.

After the camera module enters the vehicle control apparatus mode, the direction of the mobile phone usually needs to be corrected, so that the direction of the mobile phone is consistent with a disposition direction of the vehicle control apparatus. In step 226, the user rotates the mobile phone to complete angle synchronization and correction between the mobile phone and the vehicle control apparatus.

In step 230, the camera module obtains a current direction of the mobile phone.

In step 232, a current direction of the vehicle is obtained from a control module of the vehicle control apparatus by using the near field communication modules on the mobile phone side and the vehicle control apparatus side.

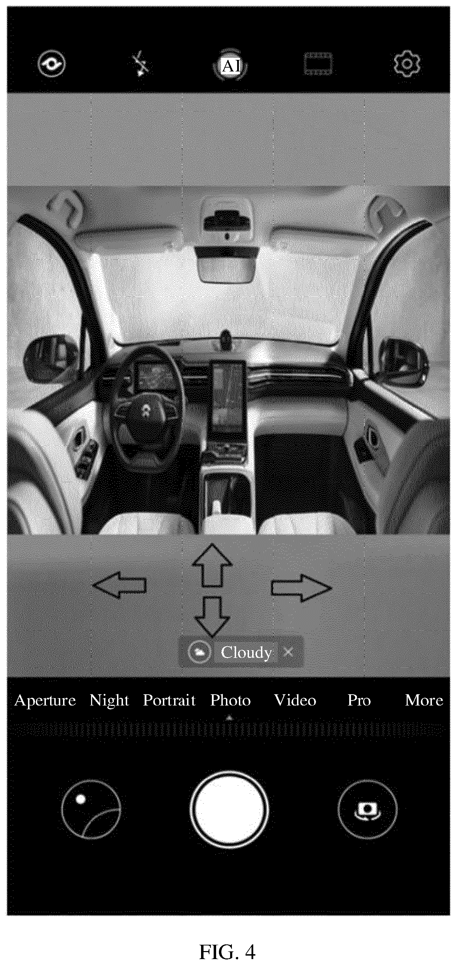

In step 234, a guiding user interface UI is displayed. The UI may be the user interface UI shown in FIG. 4. The UI prompts the user to adjust the direction of the mobile phone until the direction is consistent with that of the vehicle, to complete correction in the direction of the mobile phone. In this case, direction data of the mobile phone may be recorded. In an example, the direction data of the mobile phone is a gyroscope reading.

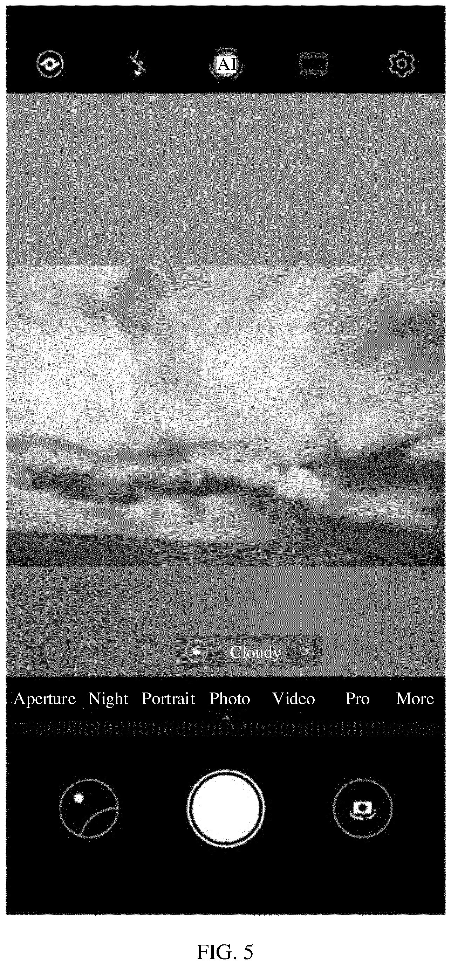

After correction in the direction of the mobile phone is completed, the camera lens may be switched to a camera in the front of the vehicle control apparatus, and an angle of the camera is in the front (0 degrees). An image or a video captured by the camera in the front is presented on a screen interface of the mobile phone, as shown in FIG. 5.

If the sensor calculation module determines that the mobile phone rotates or changes in direction in step 240, the sensor calculation module calculates a rotation angle in step 242. In an example, the rotation angle of the mobile phone is detected by using a gyroscope.

In an example, only a reading of a direction of the mobile phone relative to the vehicle needs to be read. When the user determines that the mobile phone is directly in the front of the vehicle, the user performs determination by using the user interface UI, and the mobile phone reads a direction reading of the mobile phone at this time. When the mobile phone moves or rotates, a deflection value of the direction reading of the mobile phone is read, which is the rotation angle of the mobile phone.

Then, in step 244, a camera adjustment instruction is sent to the vehicle control apparatus. The adjustment instruction includes the rotation angle or an adjustment angle. In step 246, the control module of the vehicle control apparatus adjusts an angle of the vehicle-mounted camera or switches the vehicle-mounted camera based on the rotation angle of the mobile phone of the user.

In an example, the instruction includes an information header, cameraid (that is, a camera id number), and rotation (that is, a rotation angle). The information header may be a character string, and is used to identify a current command type, for example, SetCameraRotation. A negative value of the rotation angle may indicate left turn, and a positive value may indicate right turn.

In this way, the vehicle control apparatus can automatically sense the orientation towards which the mobile phone of the user faces, and automatically sense rotation or movement of the mobile phone; and control switching and angle adjustment of the vehicle-mounted camera based on mobile phone direction change information. For example, if the mobile phone faces left, the camera is switched to the left camera, and if the mobile phone faces right, the camera is switched to the right camera. When the mobile phone rotates, the mobile phone may control the vehicle-mounted camera to rotate.

In an example, a virtual picture of the vehicle may be displayed on the mobile phone, showing distribution of the cameras. The user may select one camera from the plurality of cameras by tapping.

According to this embodiment, the user may take a photo using the mobile phone based on the vehicle-mounted camera, experience of which is the same as that of controlling the camera of the mobile phone. The mobile phone automatically controls the vehicle-mounted camera, to monitor the rotation of the mobile phone by the user to select the camera.

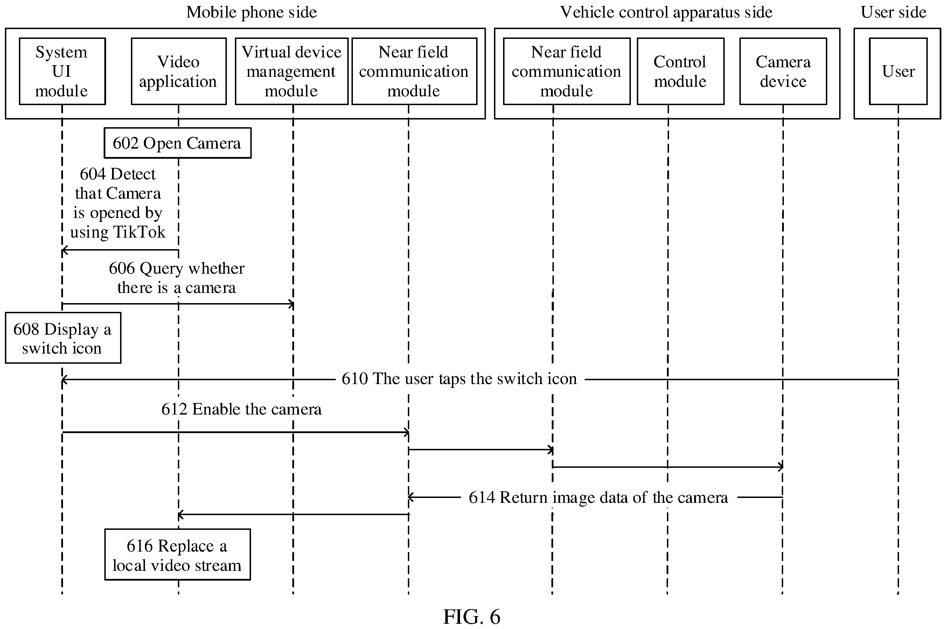

FIG. 6 is a schematic diagram of interaction between a mobile phone side and a vehicle control apparatus side according to another embodiment of this solution. Each interaction step in FIG. 6 may be executed and implemented by the corresponding module in FIG. 1. This embodiment is applicable to a scenario in which the third-party application uses the camera, for example, the user shoots a short video by using a video application (for example, TikTok) or makes a video call by using a social application (for example, WeChat). A video app is used as an example to describe the embodiment below.

In step 602, a camera module is enabled to shoot a short video by using the video app.

In step 604, a system UI module detects that the camera module is enabled by using the video app.

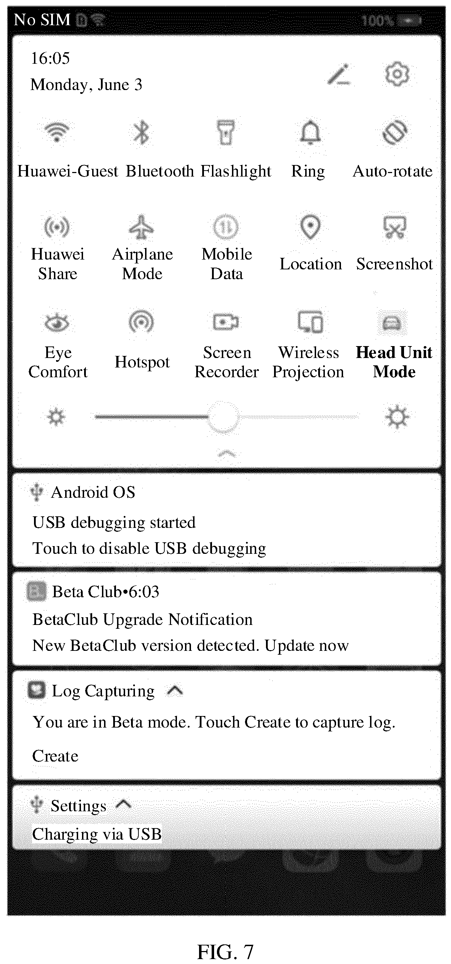

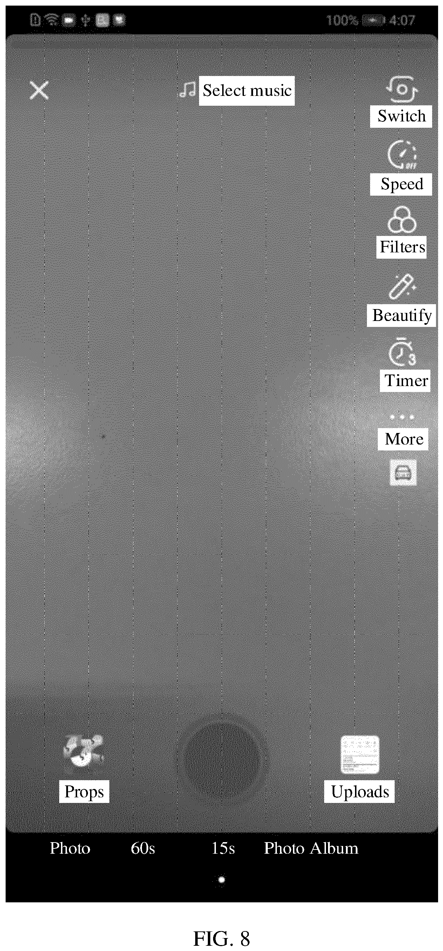

In step 606, the system UI module queries, from the virtual device management module, whether there is a vehicle-mounted camera currently. If there is a vehicle-mounted camera currently, a switch icon is displayed to prompt the user to switch to the vehicle-mounted camera. A manner of switching an icon may be displaying a switch shortcut button in a drop-down menu (refer to FIG. 7), or floating a switch button (a vehicle icon in the lower right part of FIG. 8) on an interface of the video app. For details about how to switch the camera on the system user interface UI, refer to the following description.

After the user taps the switch button in step 610, the system UI module indicates, by using the near field communication module, the control module of the vehicle control apparatus to enable the vehicle-mounted camera in step 612.

In step 614, a video stream of the vehicle-mounted camera is returned to the TikTok application.

In step 616, the TikTok application switches its video stream to a video stream of the vehicle-mounted camera.

In this embodiment, for an app that uses a camera, such as a third-party camera application, a short video application, and a video call application, a system UI is provided to switch to a vehicle control apparatus mode. After the switching, a data stream is automatically switched to a vehicle-mounted camera without adaptation of the third-party application.

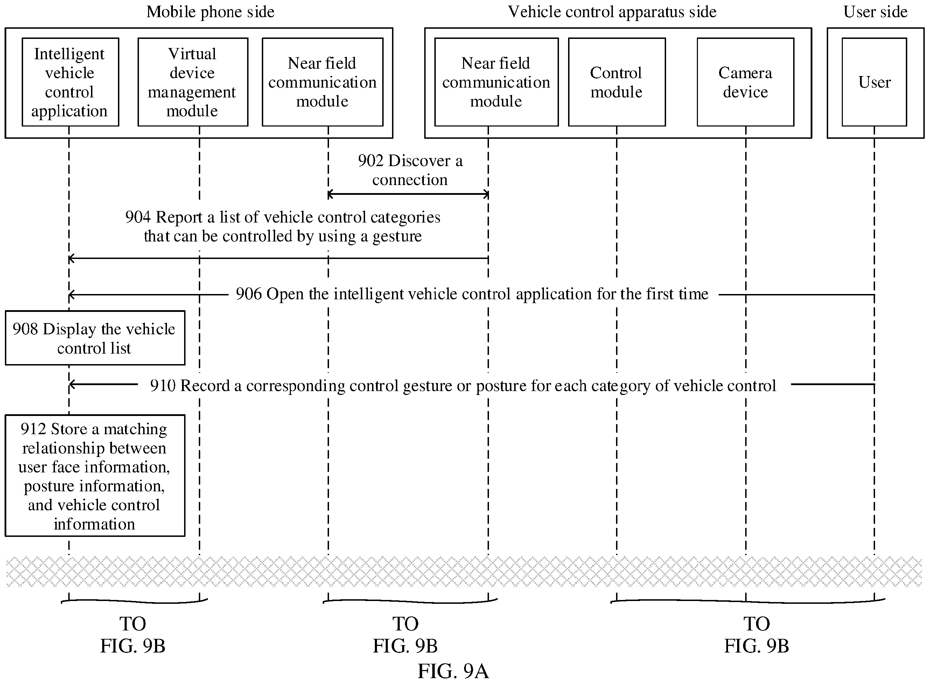

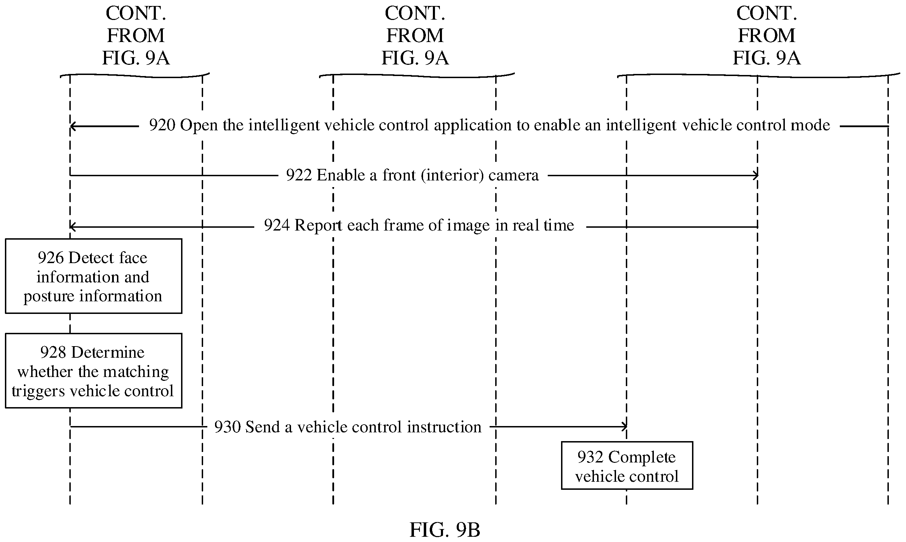

FIG. 9A and FIG. 9B are schematic diagrams of a method for interaction between a mobile phone side and a vehicle control apparatus side according to still another embodiment of this solution. Each interaction step in FIG. 9A and FIG. 9B may be executed and implemented by the corresponding module in FIG. 1. This embodiment is applicable to a scenario in which a passenger (for example, a rear-row passenger) performs vehicle control. Vehicle control refers to control of facilities in the vehicle by a user for short, including but not limited to interior stereo, music playback, video, network connection, air conditioning adjustment, door/window adjustment, seat adjustment, and the like.

As shown in FIG. 9A and FIG. 9B, in step 902, a near field communication module on the mobile phone side and a near field communication module on the vehicle control apparatus side discover and establish a connection to each other.

In step 904, a control module of the vehicle control apparatus reports a list of vehicle control categories that can be controlled by using a gesture/posture to an intelligent vehicle control application by using the near field communication module. The vehicle control category includes but is not limited to volume, air conditioning, window, song, call, and the like.

In step 906, the user opens the intelligent vehicle control application on the mobile phone for the first time. In step 908, the vehicle control list is displayed.

In step 910, the intelligent vehicle control application provides a gesture/posture recording interface. For each vehicle control category, a corresponding gesture and posture may be recorded by using an interior camera, to control a corresponding vehicle control category. For example, a "v" gesture is recorded to control a next song, and a "sliding" gesture is recorded to control an action such as volume adjustment. Certainly, a related gesture and posture may also be recorded by using a camera of the mobile phone.

In step 912, a correspondence between posture information and the vehicle control category is stored. In an example, face information of the user is also stored to distinguish operators.

When the user needs to perform vehicle control by using the mobile phone, the user opens the intelligent vehicle control application to enable the intelligent vehicle control mode in step 920.

In step 922, a front-facing (interior) camera of the vehicle control apparatus is enabled by using a virtual device management module. Therefore, in step 924, the interior camera reports each frame of image to the intelligent vehicle control application. In an example, the interior camera may be configured for the intelligent vehicle control application in advance. In another example, the user may also select one from a plurality of alternative cameras through a user interface.

The so-called front-facing and rear-facing cameras are described relative to an intelligent vehicle control application interface. In an example, the interior camera serving as the front-facing camera is displayed on the interface. The interface may be switched, so that an exterior camera is displayed on the switched interface. In this way, the user can conveniently select the interior camera and the exterior camera. Certainly, another type of camera interface arranging method is also feasible.

In step 926, the intelligent vehicle control application detects posture information from the image. In an example, to limit users, face information may be obtained synchronously or asynchronously to distinguish different users.

In step 928, when the face information and the posture information match preset information, the intelligent vehicle control application determines to trigger a corresponding vehicle control category.

In step 930, the intelligent vehicle control application sends a vehicle control instruction to the control module of the vehicle control apparatus. Therefore, in step 932, the control module of the vehicle control apparatus completes vehicle control according to the instruction. The vehicle control instruction may include an information header and a carcontrolmode (a predefined vehicle control mode). Volume adjustment is used as an example to predefine the vehicle control mode as follows:
CAR_CONTROL_MODE_MUSIC_UP = 0 (Previous)
CAR_CONTROL_MODE_MUSIC_DOWN = 1 (Next)
CAR_CONTROL_MODE_MUSIC_PAUSE = 2 (Pause)
CAR_CONTROL_MODE_MUSIC_START = 3 (Continue)
CAR_CONTROL_MODE_VOLUME_UP = 4 (Increase volume)
CAR_CONTROL_MODE_VOLUME_DOWN = 5 (Decrease volume)

In this embodiment, vehicle control based on a user gesture may be implemented by recognizing a gesture and a posture based on a computing capability of the mobile phone. In some scenarios, a rear-row passenger may adjust an air conditioner, a volume, a radio station, or the like by using a gesture. Alternatively, whether the rear-row passenger is sleeping is recognized by using a posture and a face of the rear-row passenger, to automatically adjust the volume and the like.

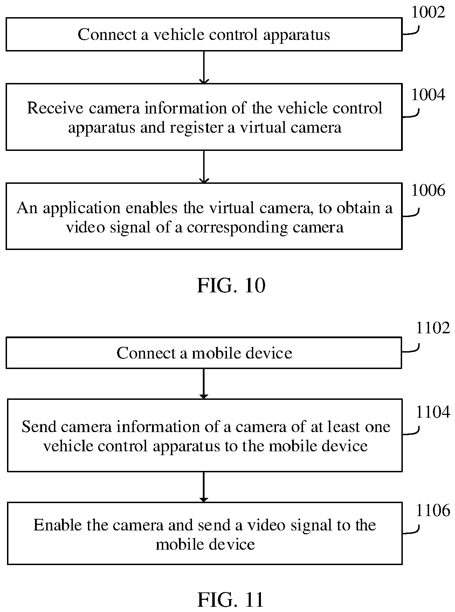

FIG. 10 is a flowchart of a method for controlling an operation of a vehicle control apparatus according to an embodiment of this solution. The method may be implemented by the mobile phone 110 shown in FIG. 1. As shown in FIG. 10, in step 1002, the vehicle control apparatus is connected, and the vehicle control apparatus includes at least one vehicle-mounted camera.

In step 1004, camera information of the at least one vehicle-mounted camera of the vehicle control apparatus is received, and at least one virtual camera is configured based on the camera information of the at least one vehicle-mounted camera, where each virtual camera of the at least one virtual camera separately corresponds to the at least one vehicle-mounted camera.

At step 1006, an application running on the mobile device enables the at least one virtual camera, to obtain a video signal of a vehicle-mounted camera corresponding to the at least one virtual camera. The enabling of the at least one virtual camera may be performed independently, or may be performed concurrently, or may be performed at different time, or the like.

For implementation details of the method in this embodiment, refer to the foregoing descriptions with reference to FIG. 2A, FIG. 2B, FIG. 6, and/or FIG. 9A and FIG. 9B. Details are not described herein again.

FIG. 11 is a flowchart of a method for controlling an operation of a vehicle control apparatus according to another embodiment of this solution. The method may be implemented by the vehicle control apparatus 150 shown in FIG. 1.

As shown in FIG. 11, in step 1102, a mobile device is connected.

In step 1104, camera information of at least one vehicle-mounted camera is sent to the mobile device, so that the mobile device configures at least one virtual camera based on the camera information of the at least one vehicle-mounted camera.

In step 1106, the at least one vehicle-mounted camera is enabled to shoot a video or an image and send a video or image signal to the mobile device according to an instruction of the mobile device.

For implementation details of the method in this embodiment, refer to the foregoing descriptions with reference to FIG. 2A and FIG. 2B, FIG. 6, and/or FIG. 9A and FIG. 9B. Details are not described herein again.

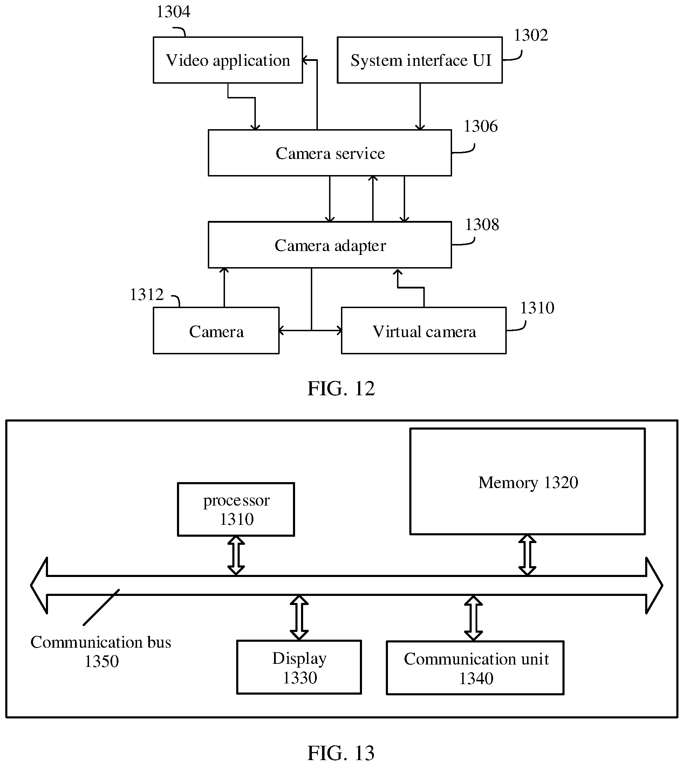

FIG. 12 is a schematic diagram of a structure of switching a camera on a system user interface UI. As shown in FIG. 12, when a video application (for example, TikTok) 1304 needs to obtain a video stream, the video application 1304 sends a request to a camera service 1306. A system user interface UI module 1302 detects the request, and then enables, by using a CameraDeviceAdapter based on a setting or a user selection, at least one of a physical camera 1312 (built in the mobile phone) and a virtual camera 1310 to provide the video stream.

FIG. 13 is a schematic diagram of a mobile device according to an embodiment of this solution. As shown in FIG. 13, the mobile device includes a processor 1310, a memory 1320, and a communication unit 1340.

The memory 1320 is configured to store computer-executable instructions. When the mobile device runs, the processor 1310 executes the computer-executable instructions stored in the memory 1320, so that an electronic device performs the method shown in FIG. 10. The communication unit 1340 may be configured to establish a connection between the mobile device and a vehicle control apparatus.

In an example, the mobile device further includes a display 1330, and the obtained video stream may be displayed on the display 1330. The display 1330 may be a touchscreen or a foldable display.

In an example, the communication unit 1340 may be a near field communication unit 1340.

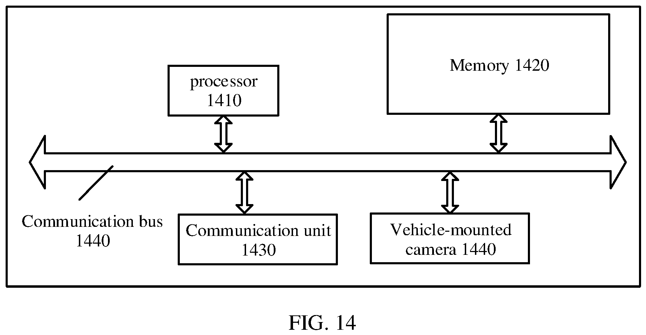

FIG. 14 is a schematic diagram of a vehicle control apparatus according to an embodiment of this solution. As shown in FIG. 14, the vehicle control apparatus includes a processor 1410, a memory 1420, and a vehicle-mounted camera 1440.

The memory 1420 is configured to store computer-executable instructions. When an electronic device runs, the processor 1410 executes the computer-executable instructions stored in the memory 1420, so that the electronic device performs the method shown in FIG. 11. The communication unit 1430 may be configured to establish a connection between the mobile device and the vehicle control apparatus.

In an example, the communication unit 1430 may be a near field communication unit.

The method steps in embodiments of this solution may be implemented in a hardware manner or may be implemented in a manner of executing software instructions by a processor. The software instructions may include corresponding software modules (for example, application layer software, a virtual camera management module, and a near field communication module shown in FIG. 1). The software modules may be stored in a random access memory (random access memory, RAM), a flash memory, or a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC.

All or some of the foregoing embodiments may be implemented by using software, hardware, firmware, or any combination thereof. When the software is used to implement embodiments, all or some of the embodiments may be implemented in a form of a computer program product. The computer program product includes one or more computer instructions. When the computer program instructions are loaded and executed on the computer, the procedure or functions according to embodiments of this solution are all or partially generated. The computer may be a general-purpose computer, a dedicated computer, a computer network, or other programmable apparatuses. The computer instructions may be stored in a computer-readable storage medium, or may be transmitted by using the computer-readable storage medium. The computer instruction may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

It may be understood that numerical symbols involved in embodiments of this solution are differentiated merely for ease of description, but are not used to limit the scope of embodiments of this solution.

## Claims

1. A method for interaction between a mobile device and a vehicle control apparatus, wherein the method is applied to the mobile device, the vehicle control apparatus is located on a vehicle, and the method comprises:
communicatively connecting the vehicle control apparatus;
receiving camera information of at least one vehicle-mounted camera of the vehicle control apparatus;
configuring at least one virtual camera based on the camera information, wherein the at least one virtual camera corresponds to the at least one vehicle-mounted camera in a one-to-one manner; and
enabling the at least one virtual camera to obtain a video signal shot by a vehicle-mounted camera corresponding to the at least one virtual camera.

2. The method according to claim 1, wherein the communicatively connecting the vehicle control apparatus comprises: implementing a communication connection to the vehicle control apparatus by using near field communication.

3. The method according to claim 1 or 2, wherein after the enabling the at least one virtual camera to obtain a video signal of a vehicle-mounted camera corresponding to each virtual camera of the at least one virtual camera, the method comprises: displaying the video signal.

4. The method according to any one of claims 1 to 3, wherein the method further comprises:
when a rotation angle of the mobile device changes within a shooting range of the vehicle-mounted camera, sending a first instruction to the vehicle control apparatus, wherein the first instruction instructs the vehicle control apparatus to adjust, based on the rotation angle, an angle of the vehicle-mounted camera, and the first instruction carries the rotation angle.

5. The method according to claim 1 or 2, wherein the method further comprises:
when the mobile device rotates or moves from a shooting range of a first vehicle-mounted camera to a shooting range of a second vehicle-mounted camera, controlling the mobile device to be switched from a first virtual camera to a second virtual camera, wherein the first vehicle-mounted camera corresponds to the first virtual camera, and the second vehicle-mounted camera corresponds to the second virtual camera; and
obtaining a video signal shot by the second vehicle-mounted camera.

6. The method according to any one of claims 1 to 5, wherein the method further comprises:
before the enabling the at least one virtual camera to obtain a video signal shot by a vehicle-mounted camera corresponding to the at least one virtual camera, presenting a user interface on a screen of the mobile device, wherein the user interface displays video data obtained by a camera of the mobile device, and the user interface is configured to prompt a user to adjust a direction of the mobile device to be consistent with a direction of the vehicle, to complete correction in the direction of the mobile device.

7. The method according to any one of claims 1 to 6, wherein the enabling the at least one virtual camera to obtain a video signal of a vehicle-mounted camera corresponding to the at least one virtual camera comprises:
obtaining the video signal of the vehicle-mounted camera corresponding to the at least one virtual camera by using the at least one virtual camera, wherein the video signal carries gesture information of the user; and
sending a third instruction to the vehicle control apparatus based on the gesture information, so that the vehicle control apparatus controls a vehicle-mounted device in the vehicle, wherein the third instruction is determined based on the gesture.

8. The method according to claim 7, wherein the method further comprises:
receiving at least one vehicle control category from the vehicle control apparatus;
obtaining at least one gesture/posture; and
storing an association relationship between the at least one gesture/posture and the at least one vehicle control category.

9. A method for controlling an operation of a vehicle control apparatus, wherein the method is applied to the vehicle control apparatus located on a vehicle, the vehicle control apparatus comprises at least one vehicle-mounted camera, and the method comprises:
establishing a communication connection to a mobile device;
sending camera information of the at least one vehicle-mounted camera to the mobile device, so that the mobile device configures at least one virtual camera based on the camera information, wherein the at least one virtual camera corresponds to the at least one vehicle-mounted camera in a one-to-one manner; and
enabling the at least one vehicle-mounted camera according to a first instruction of the mobile device, and sending a video signal shot by the at least one vehicle-mounted camera to the mobile device, wherein the video signal is a video signal of the at least one virtual camera.

10. The method according to claim 9, wherein the method further comprises:
receiving a second instruction of the mobile device, wherein the second instruction comprises an identifier of the at least one vehicle-mounted camera and a rotation angle, and the second instruction instructs to adjust, based on the rotation angle, a shooting angle of the at least one vehicle-mounted camera; and
sending, to the mobile device, video data shot by the at least one vehicle-mounted camera after the shooting angle is adjusted.

11. The method according to claim 9 or 10, wherein the at least one vehicle-mounted camera comprises a first vehicle-mounted camera and a second vehicle-mounted camera, and the method further comprises:
receiving a third instruction of the mobile device, wherein the third instruction comprises an identifier of the second vehicle-mounted camera, and the third instruction instructs the vehicle control apparatus to switch the first vehicle-mounted camera to the second vehicle-mounted camera; and
the enabling the at least one vehicle-mounted camera according to a first instruction of the mobile device, and sending a video signal shot by the at least one vehicle-mounted camera to the mobile device comprises: sending, to the mobile device, a video signal shot by using the second vehicle-mounted camera.

12. The method according to claim 9, wherein the at least one vehicle-mounted camera comprises a third camera located in the vehicle, and the vehicle further comprises a vehicle-mounted device;
the enabling the at least one vehicle-mounted camera according to a first instruction of the mobile device, and sending a video signal shot by the at least one vehicle-mounted camera to the mobile device comprises: obtaining a video signal of the third camera, wherein the video signal carries gesture information of a user; and
the method comprises: receiving a fourth instruction of the mobile device, and controlling the vehicle-mounted device according to the fourth instruction, wherein the fourth instruction is determined based on the gesture information.

13. A mobile device, comprising a processor, a memory, and a communication module, wherein the memory is configured to store computer-executable instructions, the communication module is configured to establish a connection between the mobile device and a vehicle control apparatus, and the processor is configured to execute the computer-executable instructions to enable the mobile device to perform the following operations:
communicatively connecting the vehicle control apparatus;
receiving camera information of at least one vehicle-mounted camera of the vehicle control apparatus;
configuring at least one virtual camera based on the camera information, wherein the at least one virtual camera corresponds to the at least one vehicle-mounted camera in a one-to-one manner; and
enabling the at least one virtual camera to obtain a video signal shot by a vehicle-mounted camera corresponding to the at least one virtual camera.

14. The mobile device according to claim 13, wherein the processor executes the computer-executable instructions to enable the mobile device to perform the following operation: implementing a communication connection to the vehicle control apparatus by using near field communication.

15. The mobile device according to claim 13 or 14, wherein the processor executes the computer-executable instructions to enable the mobile device to perform the following operation: displaying the video signal.

16. The mobile device according to any one of claims 13 to 15, wherein
the processor executes the computer-executable instructions to enable the mobile device to perform the following operation:
when a rotation angle of the mobile device changes within a shooting range of the vehicle-mounted camera, sending a first instruction to the vehicle control apparatus, wherein the first instruction instructs the vehicle control apparatus to adjust, based on the rotation angle, an angle of the vehicle-mounted camera, and the first instruction carries the rotation angle.

17. The mobile device according to claim 13 or 14, wherein the processor executes the computer-executable instructions to enable the mobile device to perform the following operations:
when the mobile device rotates or moves from a shooting range of a first vehicle-mounted camera to a shooting range of a second vehicle-mounted camera, controlling the mobile device to be switched from a first virtual camera to a second virtual camera, wherein the first vehicle-mounted camera corresponds to the first virtual camera, and the second vehicle-mounted camera corresponds to the second virtual camera; and
obtaining a video signal shot by the second vehicle-mounted camera.

18. The mobile device according to any one of claims 13 to 17, wherein the processor executes the computer-executable instructions to enable the mobile device to perform the following operation:
before the enabling the at least one virtual camera to obtain a video signal shot by a vehicle-mounted camera corresponding to the at least one virtual camera, presenting a user interface on a screen of the mobile device, wherein the user interface displays video data obtained by a camera of the mobile device, and the user interface is configured to prompt a user to adjust a direction of the mobile device to be consistent with a direction of the vehicle, to complete correction in the direction of the mobile device.

19. The mobile device according to any one of claims 13 to 18, wherein the processor executes the computer-executable instructions to enable the mobile device to perform the following operations:
obtaining the video signal of the vehicle-mounted camera corresponding to the at least one virtual camera by using the at least one virtual camera, wherein the video signal carries gesture information of the user; and
sending a third instruction to the vehicle control apparatus based on the gesture information, so that the vehicle control apparatus controls a vehicle-mounted device in the vehicle, wherein the third instruction is determined based on the gesture.

20. The mobile device according to claim 19, wherein the processor executes the computer-executable instructions to enable the mobile device to perform the following operations:
receiving at least one vehicle control category from the vehicle control apparatus;
obtaining at least one gesture/posture; and
storing an association relationship between the at least one gesture/posture and the at least one vehicle control category.

21. A vehicle control apparatus, comprising a processor, a memory, a communication module, and at least one vehicle-mounted camera, wherein the memory is configured to store computer-executable instructions, and the processor executes the computer-executable instructions to enable the vehicle control apparatus to perform the following operations:
establishing a communication connection to a mobile device;
sending camera information of the at least one vehicle-mounted camera to the mobile device, so that the mobile device configures at least one virtual camera based on the camera information, wherein the at least one virtual camera corresponds to the at least one vehicle-mounted camera in a one-to-one manner; and
enabling the at least one vehicle-mounted camera according to a first instruction of the mobile device, and sending a video signal shot by the at least one vehicle-mounted camera to the mobile device, wherein the video signal is a video signal of the at least one virtual camera.

22. The vehicle control apparatus according to claim 21, wherein the processor executes the computer-executable instructions to enable the vehicle control apparatus to perform the following operations:
receiving a second instruction of the mobile device, wherein the second instruction comprises an identifier of the at least one vehicle-mounted camera and a rotation angle, and the second instruction instructs to adjust, based on the rotation angle, a shooting angle of the at least one vehicle-mounted camera; and
sending, to the mobile device, video data shot by the at least one vehicle-mounted camera after the shooting angle is adjusted.

23. The vehicle control apparatus according to claim 21 or 22, wherein the at least one vehicle-mounted camera comprises a first vehicle-mounted camera and a second vehicle-mounted camera, and the processor executes the computer-executable instructions to enable the vehicle control apparatus to perform the following operations:
receiving a third instruction of the mobile device, wherein the third instruction comprises an identifier of the second vehicle-mounted camera, and the third instruction instructs the vehicle control apparatus to switch the first vehicle-mounted camera to the second vehicle-mounted camera; and
sending a video signal shot by using the second vehicle-mounted camera to the mobile device.

24. The vehicle control apparatus according to any one of claims 21 to 23, wherein the at least one vehicle-mounted camera comprises a third camera located in the vehicle; the vehicle further comprises a vehicle-mounted device; and
the processor executes the computer-executable instructions to enable the vehicle control apparatus to perform the following operations:
obtaining a video signal of the third camera, wherein the video signal carries gesture information of a user; and
receiving a fourth instruction of the mobile device, and controlling the vehicle-mounted device according to the fourth instruction, wherein the fourth instruction is determined based on the gesture information.

25. A mobile device, wherein the mobile device comprises:
a communication connection module, configured to communicatively connect the vehicle control apparatus;
a receiving module, configured to receive camera information of at least one vehicle-mounted camera of the vehicle control apparatus; a configuration module, configured to configure at least one virtual camera based on the camera information, wherein the at least one virtual camera corresponds to the at least one vehicle-mounted camera in a one-to-one manner; and
an obtaining module, configured to enable the at least one virtual camera to obtain a video signal shot by a vehicle-mounted camera corresponding to the at least one virtual camera.

26. The mobile device according to claim 25, wherein the communication connection module implements a communication connection to the vehicle control apparatus by using near field communication.

27. The mobile device according to claim 25 or 26, wherein the obtaining module displays the video signal.

28. The mobile device according to any one of claims 25 to 27, wherein the mobile device further comprises:
a sending module, configured to: when a rotation angle of the mobile device changes within a shooting range of the vehicle-mounted camera, send a first instruction to the vehicle control apparatus, wherein the first instruction instructs the vehicle control apparatus to adjust, based on the rotation angle, an angle of the vehicle-mounted camera, and the first instruction carries the rotation angle.

29. The mobile device according to claim 25 or 26, wherein the mobile device further comprises: a switching module, configured to: when the mobile device rotates or moves from a shooting range of a first vehicle-mounted camera to a shooting range of a second vehicle-mounted camera, control the mobile device to be switched from a first virtual camera to a second virtual camera, wherein the first vehicle-mounted camera corresponds to the first virtual camera, and the second vehicle-mounted camera corresponds to the second virtual camera; and the obtaining module, configured to obtain a video signal shot by the second vehicle-mounted camera.

30. The mobile device according to any one of claims 25 to 29, wherein the mobile device further comprises:
a presentation module, configured to: before the enabling the at least one virtual camera to obtain a video signal shot by a vehicle-mounted camera corresponding to the at least one virtual camera, present a user interface on a screen of the mobile device, wherein the user interface displays video data obtained by a camera of the mobile device, and the user interface is configured to prompt a user to adjust a direction of the mobile device to be consistent with a direction of the vehicle, to complete correction in the direction of the mobile device.

31. The mobile device according to any one of claims 25 to 30, wherein the obtaining module obtains, by using the at least one virtual camera, the video signal of the vehicle-mounted camera corresponding to the at least one virtual camera, wherein the video signal carries gesture information of the user; and sends a third instruction to the vehicle control apparatus based on the gesture information, so that the vehicle control apparatus controls a vehicle-mounted device in the vehicle, wherein the third instruction is determined based on the gesture.

32. The mobile device according to claim 31, wherein the mobile device further comprises:
the receiving module, configured to receive at least one vehicle control category from the vehicle control apparatus;
the obtaining module, configured to obtain at least one gesture/posture; and
a storage module, configured to store an association relationship between the at least one gesture/posture and the at least one vehicle control category.

33. A vehicle control apparatus, wherein the vehicle control apparatus comprises at least one vehicle-mounted camera, and the vehicle control apparatus comprises:
a communication connection module, configured to communicatively connect a mobile device;
a sending module, configured to send camera information of the at least one vehicle-mounted camera to the mobile device, so that the mobile device configures at least one virtual camera based on the camera information, wherein the at least one virtual camera corresponds to the at least one vehicle-mounted camera in a one-to-one manner; and
an enabling module, configured to: enable the at least one vehicle-mounted camera according to a first instruction of the mobile device, and send a video signal shot by the at least one vehicle-mounted camera to the mobile device, wherein the video signal is a video signal of the at least one virtual camera.

34. The mobile device according to claim 33, wherein the vehicle control apparatus further comprises:
a receiving module, configured to receive a second instruction of the mobile device, wherein the second instruction comprises an identifier of the at least one vehicle-mounted camera and a rotation angle, and the second instruction instructs to adjust, based on the rotation angle, a shooting angle of the at least one vehicle-mounted camera; and
the sending module, configured to send, to the mobile device, video data shot by the at least one vehicle-mounted camera after the shooting angle is adjusted.

35. The mobile device according to claim 33, wherein the at least one vehicle-mounted camera comprises a first vehicle-mounted camera and a second vehicle-mounted camera, and the vehicle control apparatus further comprises:
the receiving module, configured to receive a third instruction of the mobile device, wherein the third instruction comprises an identifier of the second vehicle-mounted camera, and the third instruction instructs the vehicle control apparatus to switch the first vehicle-mounted camera to the second vehicle-mounted camera; and
the sending module sends a video signal shot by using the second vehicle-mounted camera to the mobile device.

36. The mobile device according to claim 33, wherein the at least one vehicle-mounted camera comprises a third camera located in the vehicle, and the vehicle further comprises a vehicle-mounted device;
the sending module obtains a video signal of the third camera, wherein the video signal carries gesture information of a user; and
the vehicle control apparatus comprises: a receiving module, configured to: receive a fourth instruction of the mobile device, and control the vehicle-mounted device according to the fourth instruction, wherein the fourth instruction is determined based on the gesture information.

37. A computer storage medium, wherein the computer storage medium comprises computer instructions, and when the computer instructions are run on an electronic device, the electronic device is enabled to perform the method according to any one of claims 1 to 12.

38. A computer program product, wherein when program code comprised in the computer program product is executed by a processor in an electronic device, the method according to any one of claims 1 to 12 is implemented.
